(19)

Europäisches
Patentamt
European
Patent Office
Office européen
des brevets

(11) **EP 2 014 156 A2**

(12) **EUROPEAN PATENT APPLICATION**

(43) Date of publication:
**14.01.2009 Bulletin 2009/03**

(51) Int Cl.:
*A01J 25/16* $^{(2006.01)}$   *A23C 19/14* $^{(2006.01)}$

(21) Application number: **07301084.5**

(22) Date of filing: **04.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **INSTITUT NATIONAL DE LA RECHERCHE AGRONOMIQUE**
**75007 Paris (FR)**

(72) Inventors:
• **Helias, Arnaud**
  **75014, Paris (FR)**

• **Corrieu, Georges**
  **78220, Viroflay (FR)**
• **Guillemin, Hervé**
  **25660, Montfaucon (FR)**
• **Perret, Bruno**
  **78910, Orgerus (FR)**
• **Picque, Daniel**
  **78580, Maule (FR)**

(74) Representative: **Warcoin, Jacques et al**
  **Cabinet Régimbeau**
  **20, rue de Chazelles**
  **75847 Paris Cedex 17 (FR)**

(54) **New process for cheese ripening, and a device for implementing said process**

(57)    The present invention concerns a method for manufacturing cheese with a final targeted mass value, characterised in that the cheese mass loss is controlled during its ripening, and in that said method comprises the steps of (i) determining, with an appropriate mass sensor, the cheese mass during its ripening in a ripening chamber; and (ii) modifying the relative humidity in the ripening chamber for obtaining the final targeted cheese mass value; a device comprising means for performing a said method; a computer program for controlling a computer to perform said method; and a computer readable medium containing said computer program.

EP 2 014 156 A2

## Description

Field of the invention

The present invention generally relates to a method for monitoring and modelling the cheese mass evolution during its ripening and to a device for implementing said method.

Background of the invention

The conventional technique for the ripening of cheese consists of the storage of the cheeses in cellars at a predetermined temperature and humidity at a temperature between 5°C and 25°C for a period of between about several days to several months depending on the cheese.

This ripening step is one of the most important steps of cheese-making processes. It is characterized by the development of a microbial consortium, which activities are responsible of important biological and physico-chemical changes occurring on the surface and the core of the curd as a function of ripening time (CHOISY et al., in Cheesemaking, from Science to Quality Assurance, A. Eck and J.C. Gillis ed. Lavoisier Publishing Paris, p:82-151, 2000). All biological activities are influenced by the ripening chamber atmosphere, especially its temperature, relative humidity and gas composition (RAMET et al., in Cheesemaking, from Science to Quality Assurance, A. Eck and J.C. Gillis ed. Lavoisier Publishing Paris, p:418-446, 2000; PICQUE et al., J. Dairy Sci., vol.89, p :3250-3259,2006).

In parallel of these transformations occurring on and in the curd, gases exchanges due to water evaporation and carbon dioxide emission are noted. RAMET *et al.* (2000, abovementioned) has estimated a cheese mass loss of 3 to 8 % at ripening room level according to the cheese-type.

From an industrial point of view, the mass loss has consequences on process productivity, more precisely for protected designation of origin (PDO) products for which the weight is a conformity criterion (e.g., Camembert-Normandie PDO and Epoisses PDO require a final weight of 0.25 kg).

Simultaneously, the ripening time is of great importance since the formation of the taste and texture is greatly dependent on the ripening progress. Moreover, kind, growth and activity of the ripening micro organisms are also of great importance.

Thus, the obtaining of a cheese having the desired characteristics (flavour, texture, colour and weight) implies a constant attention of the ripener on the cheese during the ripening process and constitutes a constant problem in the cheese industry.

Summary of the invention

The present invention relates to a method for monitoring and modelling the cheese mass evolution during its ripening, characterised in that said method comprises the step of:

(i) determining, with an appropriate mass sensor the cheese mass during its ripening in a ripening chamber.

In a preferred embodiment, said method is a method for manufacturing cheese having a final specific mass value, and further comprising the step of:

(ii) modifying the relative humidity in the ripening chamber for obtaining this final targeted cheese mass value.

In another embodiment, the present invention relates to a device comprising means for performing a method as described previously.

In still another embodiment, the present invention relates to a computer program for controlling a computer to perform a method as described previously.

In still another embodiment, the present invention also relates to a computer readable medium containing a computer program as described previously.

Brief description of the drawings

Figure 1 shows the schematic representation of the model.

Figure 2 shows the data measured and calculated versus ripening time.

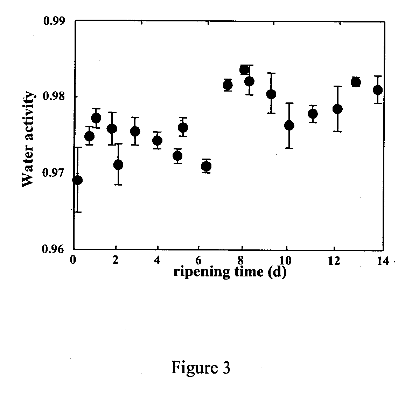

Figure 3 shows the experimental measurements of water activity carried out on the surfaces of the cheeses during the run 1.

Figure 4 shows the difference between the recorded cheese surface temperature ($T_s$) and the atmospheric temperature ($T_\infty$) versus ripening time.

Figure 5 shows the evolution of mass loss during the ripening time.

Figure 6 shows the schematic representation of an example device for implementing the method of the invention.

Detailed description

The present invention is based on the discovery of a simple but accurate model of cheese mass loss dynamic during its ripening according to available on-line measurements associated with physical and biological phenomena. The model was afterwards fitted and validated on two experimental ripening trials, wherein the relative errors were less than 1.9 % and 3.2 % for the mass loss and the mass loss rate, respectively.

Thus, in a first aspect, the present invention provides a method for monitoring and modelling the cheese mass evolution during its ripening, characterised in that said method comprises the step of:

(i) determining, with an appropriate mass sensor the cheese mass during its ripening in a ripening chamber.

The kind of cheese to which the present invention is applicable is not specifically restricted, and the present invention will be particularly as much advantageous to a kind of cheese which requires a short or a long term ripening.

As used herein, the expression "monitoring and modelling the cheese mass evolution during its ripening" refers to the cheese data and, optionally, the ripening chamber data acquisition and the comparison of said data to a reference profile in order to anticipate the cheese mass evolution during its ripening. Such reference profile may be obtained previously by the ripening of a cheese reference.

Optionally, said "monitoring and modelling the cheese mass evolution during its ripening" can be obtained by the cheese data and, optionally, the ripening chamber data acquisition and the integration of these data in the equations described hereafter in order to anticipate the cheese mass evolution during its ripening.

Generally, the typical method of producing cheese is well known from one of skill in the art and includes a preparatory step of the raw milk (standardisation, heat treatment, etc.), a step to add biological agents as starter material (such as lactobacilli and ripening micro organisms) and coagulating agents (such as rennet), a draining step to remove the whey from the curd, and a ripening step.

Mass sensors for the determination of the cheese mass are well known from one of skill in the art, and include, as an example, electronic balance. Such device can be positioned in order to measure the mass of a single cheese or a stack of cheeses.

Ripening chambers are also well known from one of skill in the art. As an example of such ripening chamber, one can cites the cellars corresponding to the traditional ripening chamber such as recent and complex devices such as those described in EP 0,307,049 B1, US 5,028,443 and FR 2,841,736 B1. As examples, industrial ripening chambers are available from SAFRAIR, CLAUGER and HEATCRAFT.

Said ripening chamber has defined temperature ($T_\infty$) and relative humidity (rh) depending on the cheese being ripened.

The relative humidity *(rh)* is a term used to describe the quantity of water vapour that exists in air. The relative humidity is defined as the ratio of the partial pressure of water vapor to the saturated vapor pressure of water at a given temperature, its values are expressed between 0 and 100 % or between 0 and 1 (85% corresponding to 0.85).

As an example, and for a soft cheese, the ripening chamber has a temperature ($T_\infty$) comprised between 10 and 15°C, a relative humidity comprised between 0.85 and 0.98, and the ripening time is comprised between 10 and 45 days.

Depending on the type of cheese, one of skill in the art can simply determinate the correct temperature and relative humidity during the ripening process in the ripening chamber.

Advantageously, the defined temperature in the ripening chamber is comprised superior or equal to 5°C, preferably said defined temperature is inferior or equal to 25°C.

Still advantageously, the defined relative humidity in the ripening chamber is comprised between 0.85 (85%) and 0.99 (99%), preferably said relative humidity is inferior or equal to 0.98 (98%).

According to a preferred embodiment, the method further comprises the step of:

(i') determining the relative humidity and the temperature in the ripening chamber with appropriate sensors, such sensors being well known from one of skill in the art.

As an example of relative humidity sensors, one can cite the sensors available from VAISSALA, GEFRAN or ROTRONIK.

Advantageously, the defined temperature and the relative humidity in the ripening chamber are maintained with appropriate means.

Such means enable to increase or decrease the temperature and/or the relative humidity in the ripening chamber for maintaining said characteristics at defined values for the ripening of a specific cheese. As an example of such means, which are well known from one of skill in the art, one can cites the means described in FR 2,841,736.

According to another preferred embodiment, the method further comprises the step of:

(i'') determining the $CO_2$ and/or $O_2$ concentration(s) in the ripening chamber with appropriate sensor(s), preferably the step of (i'') determining the $CO_2$ concentration in the ripening chamber with an appropriate sensor.

As an example of $CO_2$ and $O_2$ concentration sensors, one can cite the sensors available from EDINBURGH INSTRUMENTS, FIGARO and CITY TECHNOLOGY.

According to still another preferred embodiment, the method of the present invention is a method for manufacturing cheese having a final targeted mass value, and further comprising the step of:

(ii) modifying the relative humidity in the ripening chamber for obtaining this final targeted cheese mass value.

The final targeted (cheese) mass value depends on the manufactured type of cheese, and corresponds to a general knowledge of one of skill in the art (e.g., 250 g for camembert).

Preferably, said final targeted cheese mass value is obtained by a specific cheese mass loss rate. In fact, the ripening process is associated with a biological activity, which necessitate a minimum time depending on the manufactured cheese. Thus, it is necessary that the rate of cheese mass loss be in concordance with the biological activity within the cheese for obtaining a cheese having the desired characteristics at the end of the ripening process.

According to still another preferred embodiment, the steps (i), (i'), (i''), and (ii) are automated. Such automation can be realized by means well known of one of skill in the art such as a programmed computer enabling the acquisition and the treatment of the measurements operated in the ripening chamber, and finally the control of the means maintaining the defined temperature and the relative humidity in the ripening chamber.

According to still another preferred embodiment, the relative humidity in the ripening chamber is modified at step (ii) from less than 3%, preferably from less than 2%, for controlling the cheese mass loss, and finally obtaining a ripened cheese having the desired mass. This modification of relative humidity is inferior to 3% in order not to disturb the biological activity during the cheese ripening.

As an example, the relative humidity in the ripening chamber is increased when the cheese mass loss and/or the cheese mass loss rate is insufficient, and is decreased when the cheese mass loss and/or the cheese mass loss rate is too much important. The yield of this modification of the relative humidity will depend of the desired cheese mass loss.

According to still another preferred embodiment, the modelling of the cheese mass evolution during its ripening is obtained by the resolving of the following equations (1') and (3'):

$$\frac{dm}{dt} = -sk\left[ a_w.p_{sv}\left(T_s\right) - rh.p_{sv}\left(T_\infty\right) \right] - sw_C r_{CO_2} \qquad (1')$$

and

$$\frac{dT_s}{dt} = \frac{s}{mC}\left( h\left(T_\infty - T_s\right) + \varepsilon\sigma\left(T_\infty^4 - T_s^4\right) - \lambda k\left[ a_w.p_{sv}\left(T_s\right) - rh.p_{sv}\left(T_\infty\right) \right] + \alpha r_{CO_2} \right) \quad (3')$$

which equations disclose respectively the evolution of the cheese mass (*dm*) and the evolution of the average cheese surface temperature (*dT$_s$*) as a function of time (*dt*), wherein:

* $m$ is the cheese mass (kg),

* $t$ is the time (s),

* s (m$^2$) is the useful surface exchange of the cheese, which is calculated from the product dimensions minus the surface of the grid support

* k is the average water transfer coefficient (kg. m$^{-2}$. Pa$^{-1}$. s$^{-1}$), it can be determined according to the heat transfer coefficient (h) by the following formula

$$k = 0.66 \cdot 10^{-8} h^{1.09} \quad (\text{kg.m}^{-2}.\text{Pa}^{-1}.\text{s}^{-1})$$

* wherein h is the average convective heat transfer coefficient (W. m$^{-2}$ . K$^{-1}$). This parameter influences the rate of heat transfer between cheeses and air according to air flow and cheese shape. It must be fitted for each ripening condition. h can be obtained by nonlinear least-square regression with the Levenberg-Marquardt method (MARQUARDT, SIAM J. Appl. Math., vol.11, p: 431-441, 1963) between estimated and measured mass for the different airflow conditions.

* $a_w$ is the cheese surface water activity (expressed between 0 and 1), it is the relative availability of water in a at the surface of the cheese. This parameter is not varying in large range for a given cheese-type and can be determined using a nondestructive method by using a device for measuring said surface water activity such as, for example, FA-ST LAB (GBX, Romans sur Isère, FR).

* $p_{sv}(T_*)$ is the saturation vapour pressure at the temperature $T^*$ (Pa). The saturation vapour pressure corresponds is the static pressure of a vapour when the vapour phase of water is in equilibrium with the liquid phase of water (when the air is saturated in water) and can be calculated, as an example, from the temperature with the GOFF-GRATCH equation (World Meteorological Organization. 2000. General meteorological standards and recommended practices, Appendix A, corrigendum. WMO Technical Regulations. Vol. 49. Geneva. CH).

* $T_s$ and $T_\infty$ are the average cheese surface and ripening chamber temperatures, respectively (K). The average ripening chamber temperature ($T_\infty$) is simply determined at a given time by the temperature sensor in the ripening chamber. The average cheese surface ($T_s$) at a given time is simply determined by the equation (3').

* $rh$ is the relative humidity (expressed between 0 and 1 (0% to 100%)). The value of relative humidity is simply determined at a given time by the relative humidity sensor in the ripening chamber.

* $w$ is the molar masses (kg. mol$^{-1}$) of carbon, corresponding to 1.2 x 10$^{-2}$ kg. mol$^{-1}$.

* $r_{CO2}$ is the cheese $CO_2$ production rate (mol. m$^{-2}$ . s$^{-1}$), which can be simply determined by the evolution of the $CO_2$ concentration in the ripening chamber.

* C is the cheese specific heat (J. kg$^{-1}$ . K$^{-1}$), that corresponds to the heat energy required to raise the temperature of 1 kilogram of cheese by one degree kelvin (or Celsius). This parameters is not varying in large range for a given cheese-type and can be determined using a differential scanning calorimeter, such as PYRIS 1 (PERKIN ELMER LLC,).

* ε is the cheese emissivity (dimensionless), it is the ratio of energy radiated by the cheese to energy radiated by a black body at the same temperature. The plaster value (0.91) can be used for different type of cheeses.

* σ is the Stefan-Boltzman constant (W. m$^{-2}$ . K$^{-4}$ ), this physical constant can be easily found in the literature (for example PERRY and GREEN, Perry's Chemical Engineers' Handbook, McGraw-Hill. NY, 1997) and corresponds to 5.67 x 10$^{-8}$.

* α is the respiration heat (J. mol$^{-1}$ ), it corresponds to the heat produced by the respiration of 1 mole of carbon. As reference, the energy produced by the respiration of glucose is used (KANG and LEE, J. Food Eng., vol.35, p:65-73, 1998). Preferably, α corresponds to 4.693 x 10$^5$.

* λ is the water latent vaporization heat (J. kg$^{-1}$) that corresponds to the amount of energy in the form of heat absorbed by a substance during a change of the vaporization of one kilogram of water. These values can easily found in the literature (for example PERRY and GREEN, Perry's Chemical Engineers' Handbook, McGraw-Hill. NY, 1997), and corresponds to 2.4 x 10$^{-6}$.

Advantageously, the modelling of the cheese mass evolution during its ripening is obtained by the resolving of the following equations (1) and (3):

$$\frac{dm}{dt} = s \left( w_{O_2}.r_{O_2} - w_{CO_2}.r_{CO_2} - k \left( a_w.p_{sv}(T_s) - rh.p_{sv}(T_\infty) \right) \right) \quad (1)$$

and

$$\frac{dT_s}{dt} = \frac{s}{m \cdot C}\left( h\left(T_\infty - T_s\right) + \varepsilon\sigma\left(T_\infty^4 - T_s^4\right) - \lambda k\left(a_w.p_{sv}\left(T_s\right) - rh.p_{sv}\left(T_\infty\right)\right) + \alpha\frac{r_{O_2} + r_{CO_2}}{2}\right) \quad (3)$$

which equations disclose respectively the evolution of the cheese mass (dm) and the evolution of the average cheese surface temperature ($dT_s$) as a function of time (dt), wherein:

* $w_{O2}$ and $w_{CO2}$ are the molar masses (kg. mol$^{-1}$) of oxygen and of carbon dioxide respectively, corresponding to 3.2 x 10$^{-2}$ and 4.4 x 10$^{-2}$kg. mol , respectively.

* $r_{O2}$ is the cheese $O_2$ consumption rate (mol. m$^{-2}$ . s$^{-1}$), which can be simply determined by the evolution of the $O_2$ concentration in the ripening chamber.

In these equations, the consumption of oxygen and the emission of carbon dioxide are considered independently, since they are both not equivalent for each type of cheese.

Still advantageously, and when the method of the invention corresponds to a method for manufacturing a cheese having a final specific mass value, the modification of the relative humidity of the ripening chamber for obtaining the desired cheese mass loss with time of step (ii) is obtained by the resolving the previously described equations.

In another aspect, the present invention also provides a device comprising means for performing the method described previously.

Advantageously, said device comprises (i) a ripening chamber comprising:

a) at least one humidity sensor,
b) optionally, at least one mean for maintaining and modifying humidity in the ripening chamber,
c) at least one temperature sensor,
d) at least one mean for maintaining a determined temperature in the ripening chamber,
e) at least one cheese mass electronic balance, and
f) optionally, at least one $CO_2$ sensor and/or at least one $O_2$ sensor.

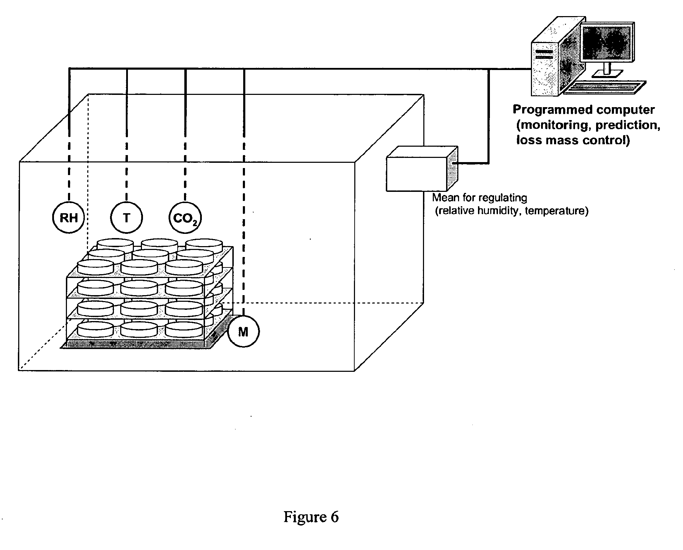

The figure 6 shows the schematic representation of an example device for implementing the method of the invention, wherein said device comprises (i) a ripening chamber comprising measurement devices for relative humidity (RH), temperature (T), $CO_2$ concentration ($CO_2$) and for cheese mass (M); (ii) a programmed computer for monitoring, predicting, and controlling cheese mass lass with time by the way of (iii) means for regulating relative humidity and temperature in the ripening chamber.

According to a preferred embodiment, said device further comprises (ii) at least one programmed computer.

In another aspect, the present invention also provides a computer program for controlling a computer to perform a method as described previously.

Finally, the present invention also provides a computer readable medium containing a computer program as described previously.

In the following, the invention is described in more detail with the examples. Yet, no limitation of the invention is intended by the details of the examples. Rather, the invention pertains to any embodiment which comprises details which are not explicitly mentioned in the examples herein, but which the skilled person finds without undue effort.

Examples

After a description of ripening conditions and available measurements, the aim of this work was the modelling of cheese mass loss dynamic resulting from physical and biological phenomena.

1) Materials and methods:

**Cheesemaking and Ripening Chambers**

For the measurements, two runs were realized in two small ripening chambers of 0.91 m$^3$ (1.9x0.8x0.6 m) for the trial 1, and 0.63 m$^3$ (1.2x0.6x0.87 m) for the trial 2. In both cases, Camembert-type cheeses were manufactured using the protocol previously described by LECLERCQ-PERLAT et al. (J. Dairy Res., vol.71, p:346-354, 2004).

In complement to the lactic acid bacteria inoculate, a ripening microbial consortia composed by *Kluyveromyces marcianus, Geotrichum candidum, Penicillium camemberti* and *Brevibacterium aurantiacium* was used. After drainage, the moulded cheeses were transferred into the ripening chambers, placed into a refrigerated room to allow the temperature control close to 14°C $\pm$ 1°C.

### *Data Acquisition.*

For each run, a cheese was continuously weighted using an electronic balance (Precisa XB620C, precision $\pm$0.01 g, PRECISA). A combined sensor (Vaissala, Dewpoint transmitter HMP 243, ETOILE INTERNATIONAL) measured the chamber temperature and the relative humidity of the ripening chamber. It was 6 cm above the weighted cheese, a distance greater than thermal boundary layer according to HARRIS et al. (J. Food Eng., vol.61, p:421-429, 2004). To determine cheese and chamber temperatures, the averages of thermocouple measurements (K type, CORREGE TEMPERATURE) were carried out. 3 thermocouples were placed 0.01 m under the surface of a dedicated cheese (experimental constraints did not allowed to weight and to measure the temperatures for the same cheese) and three others ones 6 cm above. The thermocouples were gauged before the trial in a water bath (temperature: 10°C and 15°C) and the calibration was checked after the ripening in the same way.

Chamber atmospheric composition changes were also characterized with $CO_2$ (infrared analyzer Iridium 100, City technology, UK) and $O_2$ (electrochemical sensor CiTycel, City technology) sensors. To avoid too large $CO_2$ concentration into the ripening chamber (about 4 % for the run 1 and 2 % for the run 2), which induces cheese defaults (PICQUE *et al.,* 2006, abovementioned), a manual gas renewal was performed periodically.

When the ripening chamber was used without an input of air, the variations of $CO_2$ and $O_2$ concentrations were depending only on the exchanges between the atmosphere and the cheeses. In order to study cheese respiration activity, cubic smoothing spline functions (MATLAB, The Mathworks, Natik, MA) were used to derivate the gas concentration as a function of time, then $CO_2$ production and $O_2$ consumption rate were obtained.

All on-line data (mass, temperature, relative humidity, $O_2$ and $CO_2$ concentrations) were carried out with a 6 minutes period acquisition on a computer.

Cheese water activity and specific heat were measured off-line, on some samples collected during the run 1. The water activity at the cheese surface was daily measured on each face of two cheeses, using a nondestructive method (FA-st lab, GBX). Measurements with a differential scanning calorimeter (Pyris 1, PERKIN ELMER LLC) equipped with a liquid nitrogen cooling accessory (CryoFill, PERKIN ELMER) were realized to determine specific heat.

### *Run Description.*

For the trial 1, 45 cheeses had been placed on two parallel trays, 22 cheeses for the run 2. Cheese radius and thickness were 5.5 and 3.5 cm, respectively. The initial mass of the weighted cheese was 330 g for the run 1 and 340 g for the run 2. For the run 1, the defrosting cycle of the refrigerated room had an 8 hours period. It induced an increase of 1°C during the first hour of the cycle and a relative humidity variation of 2 %. The relative humidity was manually controlled for the run 1 (through two cold traps placed inside the chamber) and automatically controlled for the run 2 (air was treated with a cold trap placed out of the chamber with a fan to manage air flow rate in this recirculation loop). With respect to Camembert making technology, the first ripening day was performed with a low value of relative humidity, close to 85 % in order to get a surface drying of the curd. The 13 following days of the run 1 were carried out with controlled variations of the relative humidity between 88 % and 94 %, in order to study the effect of the relative humidity on mass loss. For the run 2, the set point for the 13 following days was 92 % of relative humidity. To study the effect of air velocity on heat and mass transfer, fan was on between day 1 and day 7 and it was off the rest of the time. In all conditions, air velocities were lower than 0.1 m.s$^{-1}$.

### 2) Modelling

### *Mass Loss*

The cheese mass loss is the result of water evaporation (physical phenomenon) and of carbon dioxide release (biological phenomenon). The evaporative flux of water is a function of the difference of water vapour pressure between the ripening chamber and the cheese surface. Cheese surface water activity is a key parameter for this transfer. On food product, the link between water activity and water content is generally represented by sorption isotherm. Several empirical or semi-empirical models have been set up. The Guggenheim, Anderson, De Boer (GAB) equation is probably the most frequently used in food industry (CHIRIFE and IGLESIAS, J. Food Tech., vol. 13, p:159-174, 1978). Water activity mainly results from ionic composition and water content. Another important effect for dairy products is the micelle structure, which depends on pH (RÜEGG and BLANC, J. Dairy Sci., vol.59, p: 1019-1024, 1976). SAUREL et al. (J. Food Eng., vol.63, p: 163-170, 2004) have reviewed several studies on water activity modelling for cheese with various complexities. They underlined the difficulty to establish general relationships.

In this work, the following points were taking into account:

- Soft cheese water activity values are very high, up to 0.95 (Hardy, in Cheesemaking, from Science to Quality Assurance, A. Eck and J.C. Gillis ed. Lavoisier Publishing Paris, p: 60-81, 2000). Taking into account the sorption curve, important water content variations imply only small changes in water activity for values close to 1. According to the experimental water sorption isotherm shown by DESOBRY and HARDY (J. Food Sci., vol.59, p: 986-989, 1994), water content variation from 0.6 to 0.4 g /g water dry matter (37.5 to 28.6 %) implies water activity changes from 0.97 to 0.95. The high water content (50 to 60 %) of the experimental cheeses allows us to suppose very small influence on water activity. Consequently, a relationship between water activity and water content of the cheese is not necessary for mass loss estimation.
- According to HARDY (Sci. Aliments., vo1.5, p: 153-162, 1985), after 3 days of ripening, salt concentrations are similar in the core and in the rind of a Camembert. The small size of Camembert and its important water content could explain this fast equilibrium. Consequently, the brining influences the cheese water activity value but no significant variation of this factor occurred during the ripening.

Considering these aspects, the water activity was taken constant and none water or salt diffusion phenomena inside the cheese were represented.

Biological activities are characterized by oxygen consumption and carbon dioxide production, which induce a matter flux between the cheeses and the ripening chamber atmosphere. Other gaseous productions (like ammonia and aroma compounds) are considered as negligible in a mass dynamic point of view. Anaerobic pathways at core level cannot be neglected for the cheese taste elaboration but they are not significantly involved in mass loss. For Camembert-type cheeses, main part of the biological activity and gaseous exchange in ripening process are localized at the rind level (BLANC et al., Schweiz. Milchw. Forsch., vol.12(2), p :30-34, 1983). Aerobic pathways are prevailing when the respiration quotient (RQ) is near to one, which is the case for Camembert-type cheeses, (PICQUE $et$ $al.,$ 2006, above-mentioned). The $O_2$ consumption ($r_{O_2}$) rate and the $CO_2$ production rate ($r_{CO_2}$) (mol. $m^{-2}$ . $s^{-1}$) were calculated from $CO_2$ and $O_2$ concentrations measured in the ripening chamber. The matter balance linked to respiration was obtained by the difference between these two rates.

For a given cheese, the rate of cheese mass ($m$ (kg)) variation is represented as follow (kg.$d^{-1}$):

$$\frac{dm}{dt} = s\left(w_{O_2}.r_{O_2} - w_{CO_2}.r_{CO_2} - k\left(a_w.p_{sv}\left(T_s\right) - rh.p_{sv}\left(T_\infty\right)\right)\right) \quad (1)$$

The constants used to cheese mass loss estimation are disclosed in table I.

Table I

| Parameter | Symbol | Value | SEM[*] |
|---|---|---|---|
| $O_2$ molar mass (kg.$mol^{-1}$) | $w_{O2}$ | -2 $3.2\times10$ | - |
| CO2 molar mass (kg.$mol^{-1}$) | $w_{CO2}$ | -2 $4.4\times10$ | - |
| Respiration heat (J.$mol^{-1}$) | $\alpha$ | $4.693\times10^5$ | - |
| Latent heat of water evaporation (J.$kg^{-1}$**) | $\lambda$ | 6 $2.47\times10^6$ | - |
| Product emissivity (dimensionless) | $\varepsilon$ | 0.91 | - |
| Stefan-Boltzmann constant (W.$m^{-2}$ .$K^{-4}$) | $\sigma$ | -8 $5.67\times10$ | - |
| Surface area of cheese ($m^{2***}$) | $s$ | -2 $2.6x10$ | - |
| Surface water activity (dimensionless) | $a_w$ | 0.976 | 0.001 |

(continued)

| Parameter | Symbol | Value | SEM* |
|---|---|---|---|
| Specific heat (J.kg$^{-1}$ .K$^{-1}$) | $C$ | 3 2.194×10 | 59 |

| |
|---|
| * SEM = Standard error of the mean, used to experimental acquisitions.<br>** Latent heat of water evaporation value calculated at 14°C.<br>*** Total surface of the cheese (3.11x10$^{-2}$ m$^2$) less the surface covered by the grid (0.51×10$^{-2}$ m$^2$) where the cheese is placed during the ripening. |

s (m$^2$) is the useful surface exchange of the cheese (see table I), calculated from the product dimensions minus the surface of the grid support (corresponding to 46 % of the inferior side).

$w_{O2}$ and $w_{CO2}$ are the molar masses (kg. mol$^{-1}$) of oxygen and carbon dioxide, respectively.

$a_w$ is the cheese surface water activity.

$T_s$ and $T_\infty$ are the average cheese surface and ripening chamber temperatures, respectively (K).

rh is the relative humidity (expressed between 0 and 1).

$p_{sv}$ ($T_*$) is the saturation vapour pressure at the temperature $T_*$ (Pa), it was calculated from the temperature with the GOFF-GRATCH equation (World Meteorological Organization. 2000. General meteorological standards and recommended practices, Appendix A, corrigendum. WMO Technical Regulations. Vol. 49. Geneva. CH).

k is the average water transfer coefficient (kg. m$^{-2}$. Pa$^{-1}$. s$^{-1}$ ). k was assumed constant for a given air flow pattern around the cheese (this point will be explained later).

***Cheese Surface Temperature.***

According to HARDY and SCHER (in Cheesemaking, from Science to Quality Assurance, A. Eck and J.C. Gillis ed. Lavoisier Publishing Paris, p: 447-473, 2000), the cheese heat conductivity varies between 0.3 to 0.4 W. m$^{-1}$. K$^{-1}$. Then, the cheese Biot number is comprised between 0.24 and 0.32. Consequently the heat conduction inside the product is very fast. There is no thermal gradient inside the cheeses and the cheese surface temperature is assumed as representative of the cheese temperature.

Direct heat exchange between the cheeses and their close atmosphere results from convective and radiative fluxes; in addition to these phenomena, the moisture loss induces an evaporative heat consumption flux. The cheese rind presents a high biological activity during the ripening, characterized by an important mycelium development. From an energetic point of view, fermentative pathways can be neglected, as described by PAJONK et al. (J. Food Eng., vol. 57, p:72(2), p:231-243, 2003) for Emmental ripening heat transfer. In contrast, respiratory heat must be taken into account. As for several vegetal food product storage (KANG and LEE, J. Food Eng., vol.35, p:65-73, 1998; SONG et al., J. Food Eng., vo1.53, p:103-109, 2002), the generic glucose aerobic respiration equation was used:

$$\mathrm{C_6H_{12}O_6} + 6\,\mathrm{O_2} \rightarrow 6\,\mathrm{CO_2} + 6\,\mathrm{H_2O} + 2.816 \times 10^6 \mathrm{J \cdot mol^{-1}} \qquad (2)$$

Equation (2) gives a RQ equal to 1 due to the equimolarity between $O_2$ and $CO_2$. In a cheese context, many substrates are oxidized (lactose, lactate, and partially lipids and proteins), that can induce RQ variation close to one. The variability of RQ was thus represented by the average of $r_{o2}$ and $r_{CO2}$.

From these considerations, the rate of cheese surface temperature variation is represented as follow:

$$\frac{dT_s}{dt} = \frac{s}{m \cdot C}\left( h\left(T_\infty - T_s\right) + \varepsilon\sigma\left(T_\infty^4 - T_s^4\right) - \lambda k\left(a_w.p_{sv}\left(T_s\right) - rh.p_{sv}\left(T_\infty\right)\right) + \alpha\frac{r_{O_2} + r_{CO_2}}{2} \right) \quad (3)$$

C is the cheese specific heat (J. kg$^{-1}$ . K$^{-1}$).

h is the average convective heat transfer coefficient (W. m$^{-2}$ . K$^{-1}$).

ε is the cheese emissivity (dimensionless).

σ is the Stefan-Boltzman constant (W. m$^{-2}$ . K$^{-4}$).

α is the respiration heat for 1 mole of carbon dioxide release (J. mol$^{-1}$).

λ is the water latent vaporization heat (J. kg$^{-1}$). It depends on ripening temperature but an average value can be taken with an error smaller than 0.2 % because of the low temperature changes (10 to 15°C) during ripening.

*Transfer coefficients.*

The effect of the small variation of temperature (less than 5°C) and relative humidity (less than 10 %) on the average convective heat and mass transfer coefficients, h and k respectively, can be neglected. Consequently, *h and k* are mainly determined by the cheese shape and the airflow properties (KONDJOYAN and DAUDIN, J. Food Eng., vol. 32, p:255-240, 1997). MIRADE *et al.* (2004, abovementioned) used the psychrometric method to determine the transfer coefficient values of a Camembert shape plaster object according to the average air flow *v* (m. s$^{-1}$):

$$h=3.95e^{223_v}\ (\mathrm{W.m^{-2}.K^{-1}}) \qquad (4)$$

$$k=2.92e^{-242v}.\ \ 10^{-8}\ (\mathrm{kg.m^{-2}.Pa^{-1}.s^{-1}}) \qquad (5)$$

Unfortunately, these relations were not relevant for the very low air velocity measured in the studied ripening chambers (v was lower than 0.1 m. s$^{-1}$, data not shown) Indeed, OZISIK (Heat transfer: a basic approach. McGraw-Hill. NY, 1985) established the theoretical *h* value (1.9 W. m$^{-2}$ . K$^{-1}$) for a no stirred chamber, which is different of the result (3.95) obtained with equation (4).

Because of the high sensitivity of mass loss with respect to transfer coefficients, h was obtained by nonlinear least-square regression with the Levenberg-Marquardt method (MARQUARDT, SIAM J. Appl. Math., vo1.11, p: 431-441, 1963) between estimated and measured mass for the different airflow conditions. In this case, the following relation was established from equations (4) and (5):

$$k=0.66.\ 10^{-8}\ h^{1.09}\ (\mathrm{kg.m^{-2}.Pa^{-1}.s^{-1}}) \qquad (6)$$

**Model Overview.**

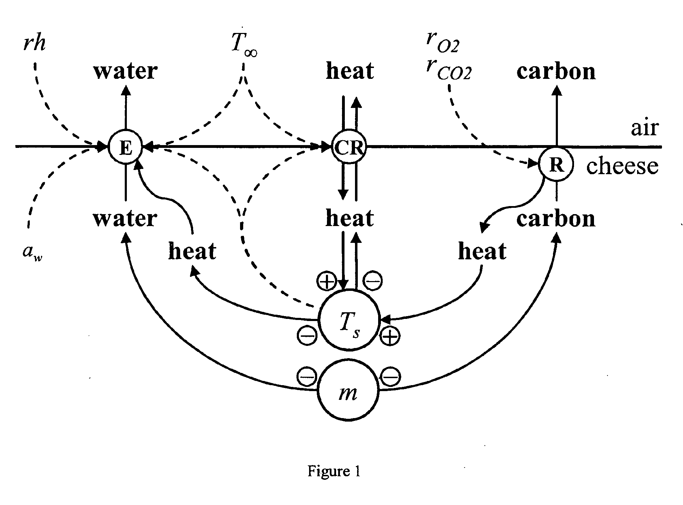

The figure 1 shows the schematic representation of the model with 4 input variables (relative humidity (*rh*), atmospheric temperature ($T_\infty$), oxygen consumption rate ($r_{o2}$), and carbon dioxide production rate ($r_{CO2}$)), and 2 state variables (surface temperature ($T_s$), and mass (m)). 3 main phenomena were taking into account:

- the water evaporation (E) inducing mass decrease and energy consumption,

- convective and radiative exchanges (CR): the convective and radiative heat fluxes, governed by the difference between the cheese surface and the chamber temperatures,

- respiratory activity (R): the exothermic respiratory metabolism, inducing a carbon loss.

A dashed arrow represents a variable influence on a phenomenon, a solid arrow shows the consequences (positive or negative) of a phenomenon on a state variable.

The model can be further simplified. Since the $O_2$ consumption ($r_{O2}$) rate and the $CO_2$ production rate ($r_{CO2}$) (mol. m$^{-2}$ . s$^{-1}$) are nearly equivalent for most of the cheeses, it is possible to consider only one of this rate. As a consequence, it is possible to consider the variation in carbon as the result of $O_2$ consumption and $CO_2$ emission. The rate of cheese mass (m (kg)) variation can be then represented as follows:

$$\frac{dm}{dt} = -sk\left[a_w.p_{sv}(T_s) - rh.p_{sv}(T_\infty)\right] \quad -sw_C r_{CO_2} \tag{1'}$$

Wherein $w$ is the molar masses (kg. mol$^{-1}$) of carbon. Then, this model enables to measure only $O_2$ consumption or $CO_2$ emission during ripening in order to evaluate the cheese mass loss with time.

The cheese temperature variation can be also simplified and be represented as follows:

$$\frac{dT_s}{dt} = \frac{s}{mC}\left(h(T_\infty - T_s) \quad +\varepsilon\sigma(T_\infty^4 - T_s^4) \quad -\lambda k\left[a_w.p_{sv}(T_s) - rh.p_{sv}(T_\infty)\right] \quad +\alpha r_{CO_2}\right) \tag{3'}$$

3) Results and discussion

### Run Description

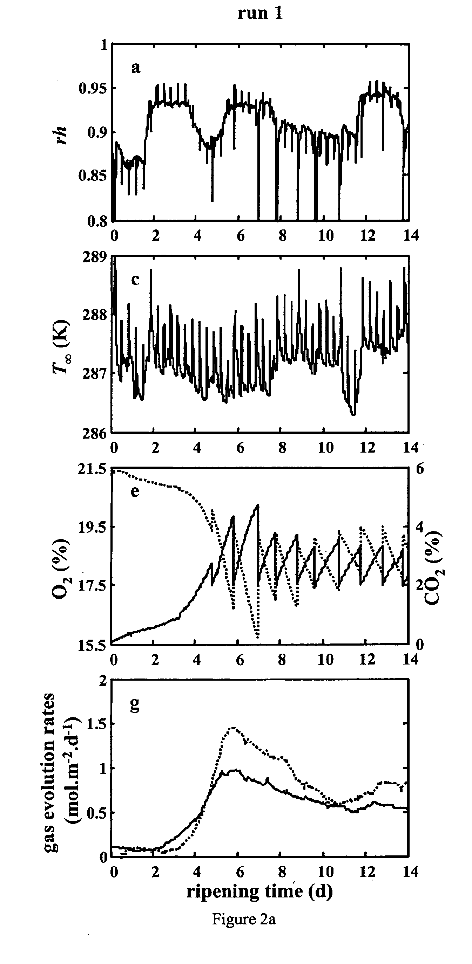

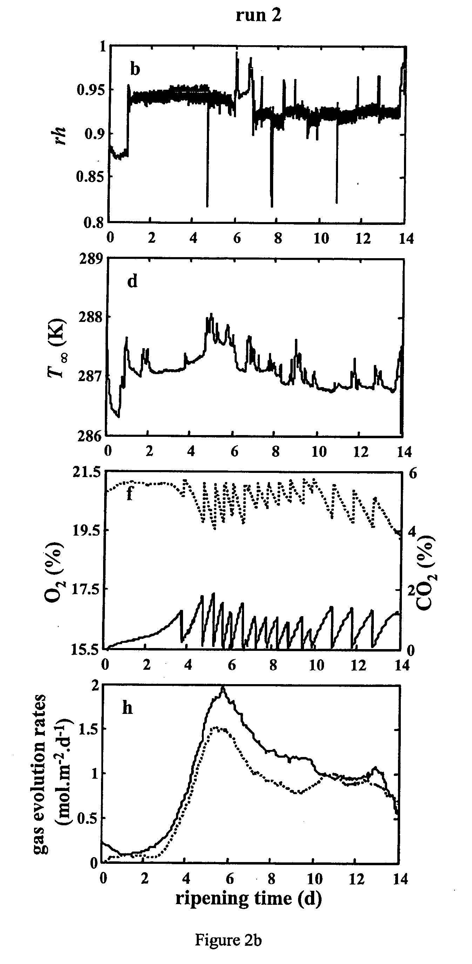

The figure 2 shows the data measured and calculated versus ripening time for run 1 (a, c, e, g) and run 2 (b, d, f, g). a, b: on-line measurement of ripening chamber relative humidity *(rh)*, c, d: on-line measurement of the ripening chamber temperature $(T_\infty)$, e, f: on-line measurement of the concentration of oxygen ($O_2$, dotted line) and carbon dioxide ($CO_2$, solid line) concentration, g, h: calculation of the oxygen production rate (dotted line) and the carbon dioxide consumption rate (solid line). To clarity reason, a one-day moving average filter to get noise reduction was used for the oxygen production rate and carbon dioxide consumption rate (g, h).

For the run 1 (figure 2, left part) the chamber temperature was between 286 and 289 K, as a function of a defrosting event performed automatically every 8 hours. This phenomenon induced also relative humidity variations, decreases for low relative humidity values and increases for high values. The dry air injections carried out in order to remove the $CO_2$, produced important relative humidity decreases (*e.g.* days 7 to 11 on figure 2.a). Added to these abrupt changes, manual low relative humidity variations between 88 and 94 % were carried out in order to study changes in the mass loss kinetic.

The run 2 (figure 2, right part) was carried out in a ripening chamber with an automated relative humidity control and without defrosting events. From day 0 to day 1 and from day 7 to the end of the run, the fan of the recirculation loop was stopped, and then the relative humidity regulation was carried out by natural convection. That implied two different airflows close to the cheeses (fan off and fan on).

Figure 2.g, h represents the oxygen consumption and the carbon dioxide production rates for the two runs. They were established from data shown in figure 2.e, f, respectively: gas rates were the first derivative of the gas concentrations according to time. During air injection time, the calculations were not done and interpolated values were used.

### Verification of the Model Hypotheses

### Water Activity.

The figure 1 shows the changes in the water activity of cheese surface versus ripening time. In the figure, (•) corresponds to the mean of 4 measurements performed on 2 faces of 2 cheeses during the run 1, and (-) correspond to the standard error of the mean.

The results established that the water loss along all the ripening process did not influence water activity ($a_w$). Most of the values were comprised between 0.969 and 0.984 and the average, equal to 0.976, could be used as the water activity value. Two phases with constant $a_w$ were observed (d0 to d6, $a_w = 0.973$ and d7 to d14, $a_w = 0.98$), probably because of the growth of microflora and the increase of pH. Except on the first day, characterized by an increase of water activity values (from 0.969 to 0.977), the salt diffusion effect was not observed.

### Heat Transfer.

The model takes into account a temperature gradient between cheese surface and ripening chamber atmosphere due to respiratory metabolism.

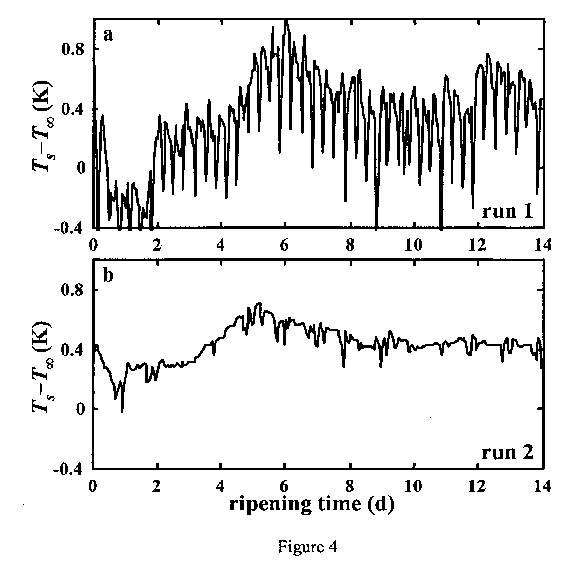

The figure 4 shows the difference between the recorded cheese surface temperature ($T_s$) and the atmospheric

temperature ($T_\infty$) versus ripening time.

The temperature measurements performed on a cheese on each run checked this hypothesis (figure 4.a, b for the run 1 and 2, respectively). The gradient of temperature varied roughly from 0 to 0.8°C (run 1) and to 0.65°C (run 2). It increased with the biological activity with a maximum between day 5 and day 6 as observed for the gas exchanges (figure 2.g, h). Thus, the results clearly demonstrate that convective and radiative heat transfers and respiration heat have significant effects.

***Parameter Values.***

Table I summaries the values of the parameters used for the mass loss estimation. The surface water activity ($a_w$) and the specific heat (C) of the cheese were determined from experimental measurements performed during the ripening (run 1). The cheese emissivity had been chosen equal to those of plaster (MIRADE *et al.,* 2004, abovementioned). The other parameters were obtained from the literature.

The only fitting procedure to find parameter value concerned the average convective heat transfer coefficient (table II). Three air flow conditions were considered: the run 1, the run 2 with a forced convection for the relative humidity regulation (fan on) and the run 2 with a free convection (fan off). Subsets of mass experimental measurements were used for fitting this parameter: - run 1 - d0 to d4, - run 2 (fan on) - d1 to d3, and - run 2 (fan off) - d7 to d9. The convective heat transfer coefficients were used according to equation (6) to determine the average water transfer coefficients.

***Mass Loss Estimation***

With an initial mass of 330 g and 340 g for the run 1 and the run 2 respectively, the mass cheese dynamics were simulated during 14 days in the ripening chamber.

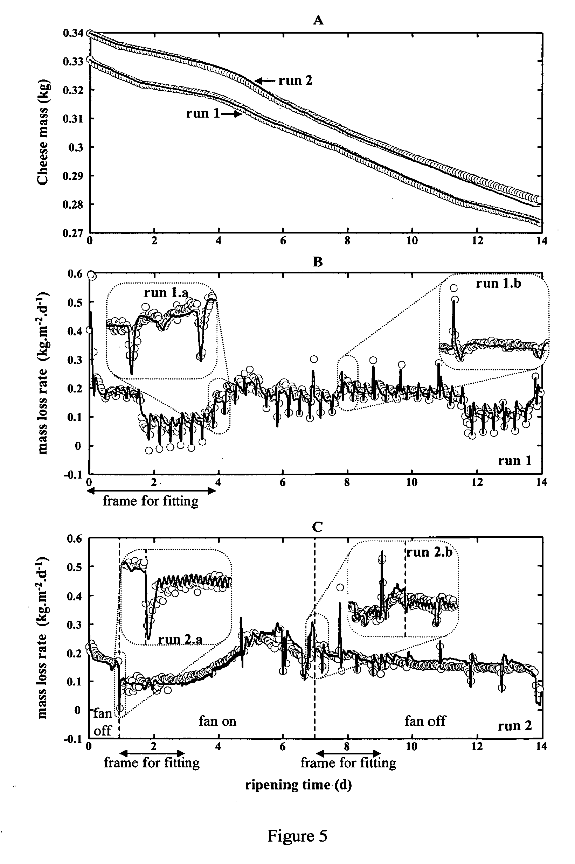

The figure 5 shows the evolution of mass loss during the ripening time. (A) Measured (O) and estimated (-) cheese mass loss versus ripening time for the runs 1 and 2. Only two hours mean values are represented for clarity reason. B, C: Measured (O) and estimated (-) cheese mass loss rate versus ripening time for the runs 1 (B) and 2 (C). Only two hours mean values are represented to clarity reason except for zoom insertions where the acquisition step is 6 minutes. Insertion runl.a: changes in mass loss during a defrosting event. Insertion run1.b: changes in mass loss during a dry air injection. Insertion run2.a: changes in mass loss during relative humidity setpoint and air flow velocity variations. Insertion run2.b: changes in mass loss during dry air injection and air flow velocity variations.

Surprisingly, and as shown on figure 5, it appears that the model was able to represent the global evolution of the cheese mass loss. Figure 5.A allows a comparison between the cheese masses measured by on-line weighting and calculated by the model. The corresponding mass loss rates are shown on figure 5.B and 5.C. The cheeses lost on average 4.1 g. d and 4.2 g. d$^{-1}$, with a total loss of 58 g and 59 g, for run 1 and run 2 respectively. The mass loss rate is very high (0.2 kg.m$^2$ .d$^{-1}$) when *rh* = 85 % on day 1. Then, it decreased when *rh* increased. For example, when the relative humidity setpoint changes rapidly from 85 % to 92 % (see zoom insertion run2.a, figure 5.C) the mass loss rate decreased of at least 50 %.

The mass loss rate increased again with the respiratory activity to reach about 0.25 kg.m$^2$.d$^{-1}$ when this activity was maximal (d5 and d6). After this step, and to the end of the ripening process, the mass loss rate decreased in the same way as the respiratory activity decreasing. This study obviously showed the mass loss accelerations close to day 4 were the consequence of the microflora growth. For example, in the run 2, the mass loss rate changed from 100 g. m$^{-2}$ . d$^{-1}$ to 180 g. m$^{-2}$ . d$^{-1}$ between d2 and d4 with a constant relative humidity for this time frame. In the same period, the carbon loss changed from 1.2 g. m $^2$. d$^{-1}$ (0.1 mol. m$^{-2}$ . d$^{-1}$ ) to 9 g. m$^{-2}$ . d$^{-1}$ (0.75 mol. m$^{-2}$ . d$^{-1}$ ) (see figure 2.h). As a consequence, the mass loss rate changes could not be explained only by the carbon loss changes and the biological activities induced also water evaporation. This result showed that the biological activity had to be taken into account and was correctly represented by the model.

Finally, the residual (differences between observed and predicted values) at the end of the runs were - 0.09 g (0.17 % of the total mass loss) for the run 1 and -1.7 g (2.9 % of the total mass loss) for the run 2. The relative errors of the model, defined as the residual standard deviation divided by the value range, were equal to 0.65 % and 1.86 % for the mass, 2.13 % and 3.18 % for the mass loss rate, for run 1 and run 2 respectively. Another significant property of the model was to allow a good fitting between measured and calculated mass loss values for fast changes in the working conditions. For example, fast relative humidity changes linked to a defrosting event (see figure 5.B, zoom insertion run1.a) or to dry air injection (see figure 5.B, zoom insertion run1.b, and the left part of the zoom insertion run2.b) were correctly represented by the model. In fact, the general shape of the mass loss rate versus time is in good agreement with the changes in relative humidity.

**Claims**

1. A method for monitoring and modelling the cheese mass evolution during its ripening, **characterised in that** said method comprises the step of (i) determining, with an appropriate mass sensor the cheese mass during its ripening in a ripening chamber.

2. The method according to claim 1, wherein said method further comprises the step of (i') determining the relative humidity and the temperature in the ripening chamber with appropriate sensors.

3. The method according to any one of claims 1 or 2, wherein the ripening chamber has defined temperature ($T_\infty$) and relative humidity ($rh$).

4. The method according to any one of claims 1 to 3, wherein said method further comprises the step of (i") determining the $CO_2$ and/or $O_2$ concentration(s) in the ripening chamber with appropriate sensor(s).

5. The method according to any one of claims 1 to 4, wherein said method is a method for manufacturing cheese having a final targeted mass value, and further comprising the step of (ii) modifying the relative humidity in the ripening chamber for obtaining this final targeted cheese mass value.

6. The method according to claim 5, wherein the humidity in the ripening chamber is modified at step (ii) from less than 3%, preferably from less than 2%.

7. The method according to claim 2, wherein the defined temperature and the humidity in the ripening chamber are maintained with appropriate means.

8. The method according to any one of claims 1 to 7, wherein the steps (i), (i'), (i"), and (ii) are automated.

9. The method according to claim any one of claims 1 to 8, wherein the modelling of the cheese mass evolution during its ripening is obtained by the resolving of the following equations (1') and (3'):

$$\frac{dm}{dt} = -sk\left[a_w . p_{sv}\left(T_s\right) - rh . p_{sv}\left(T_\infty\right)\right] \quad -sw_C r_{CO_2} \tag{1'}$$

and

$$\frac{dT_s}{dt} = \frac{s}{mC}\left(h\left(T_\infty - T_s\right) \quad +\varepsilon\sigma\left(T_\infty^4 - T_s^4\right) \quad -\lambda k\left[a_w . p_{sv}\left(T_s\right) - rh . p_{sv}\left(T_\infty\right)\right] \quad +\alpha r_{CO_2}\right) \tag{3'}$$

which equations disclose respectively the evolution of the cheese mass *(dm)* and the evolution of the average cheese surface temperature ($dT_s$) as a function of time *(dt)*, wherein:

    * m is the cheese mass (kg),
    * $t$ is the time (s),
    * $s$ ($m^2$) is the useful surface exchange of the cheese,
    * k is the average water transfer coefficient (kg. $m^{-2}$ . $Pa^{-1}$ . $s^{-1}$),
    * $a_w$ is the cheese surface water activity,
    * $p_{sv}$ ($T_*$) is the saturation vapour pressure at the temperature $T_*$(Pa),
    * $T_s$ and $T_\infty$ are the average cheese surface and ripening chamber temperatures, respectively (K),
    * $rh$ is the relative humidity (expressed between 0 and 1),
    * $w_C$ is the molar masses (kg. $mol^{-1}$) of carbon, and
    * $r_{CO2}$ is the cheese $CO_2$ production rate (mol. $m^{-2}$ . $s^{-1}$);
    * C is the cheese specific heat (J. $kg^{-1}$ . $K^{-1}$),

**EP 2 014 156 A2**

* $h$ is the average convective heat transfer coefficient (W. m$^2$. K$^{-1}$),
* $\varepsilon$ is the cheese emissivity (dimensionless),
* $\sigma$ is the Stefan-Boltzman constant (W. m$^{-2}$ . K$^{-4}$),
* $\alpha$ is the respiration heat for 1 mole of carbon dioxide release (J. mol$^{-1}$), and
* $\lambda$ is the water latent vaporization heat (J. kg$^{-1}$),

**10.** The method according to claim 9, wherein the modelling of the cheese mass evolution during its ripening is obtained by the resolving of the following equations (1) and (3):

$$\frac{dm}{dt} = s\left(w_{O_2}.r_{O_2} - w_{CO_2}.r_{CO_2} - k\left(a_w.p_{sv}\left(T_s\right) - rh.p_{sv}\left(T_\infty\right)\right)\right) \quad (1)$$

and

$$\frac{dT_s}{dt} = \frac{s}{m \cdot C}\left(h\left(T_\infty - T_s\right) + \varepsilon\sigma\left(T_\infty^4 - T_s^4\right) - \lambda k\left(a_w.p_{sv}\left(T_s\right) - rh.p_{sv}\left(T_\infty\right)\right) + \alpha\frac{r_{O_2} + r_{CO_2}}{2}\right) \quad (3)$$

which equations disclose respectively the evolution of the cheese mass (dm) and the evolution of the average cheese surface temperature ($dT_s$) as a function of time ($dt$), wherein:

* $w_{O2}$ and $w_{CO2}$ are the molar masses (kg. mol$^{-1}$) of oxygen and of carbon dioxide respectively, and
* $r_{O2}$ is the cheese $O_2$ consumption rate (mol. m$^{-2}$ . s$^{-1}$).

**11.** The method according to any one of claims 9 or 10, wherein said method is a method for manufacturing a cheese having a final specific mass value, and wherein the modification of the relative humidity of the ripening chamber for obtaining the desired cheese mass loss with time of step (ii) is obtained by the resolving said equations.

**12.** A device comprising means for performing a method as claimed in any one of claims 1 to 11.

**13.** A device as claimed in claim 12, wherein said device comprises (i) a ripening chamber comprising:

a) at least one humidity sensor,
b) optionally, at least one mean for maintaining and modifying humidity in the ripening chamber,
c) at least one temperature sensor,
d) at least one mean for maintaining a determined temperature in the ripening chamber,
e) at least one cheese mass weighting device, and
f) optionally, at least one $CO_2$ sensor and/or at least one $O_2$ sensor.

**14.** The device according to claim 12, wherein said device further comprises (ii) at least one programmed computer.

**15.** A computer program for controlling a computer to perform a method as claimed in any one of claims 1 to 11.

**16.** A computer readable medium containing a computer program as claimed in claim 15.

14

Figure 1

**run 1**

Figure 2a

run 2

Figure 2b

Figure 3

Figure 4

Figure 5

**Programmed computer
(monitoring, prediction,
loss mass control)**

Mean for regulating
(relative humidity, temperature)

RH    T    CO₂    M

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0307049 B1
- US 5028443 A
- FR 2841736 B1
- FR 2841736

### Non-patent literature cited in the description

- **CHOISY et al.** Cheesemaking, from Science to Quality Assurance. Lavoisier Publishing Paris, 2000, 82-151
- **RAMET et al.** Cheesemaking, from Science to Quality Assurance. Lavoisier Publishing Paris, 2000, 418-446
- **PICQUE et al.** *J. Dairy Sci.,* 2006, vol. 89, 3250-3259
- **MARQUARDT.** *SIAM J. Appl. Math.,* 1963, vol. 11, 431-441
- **PERRY ; GREEN.** Perry's Chemical Engineers' Handbook. McGraw-Hill, 1997
- **KANG ; LEE.** *J. Food Eng.,* 1998, vol. 35, 65-73
- **LECLERCQ-PERLAT et al.** *J. Dairy Res.,* 2004, vol. 71, 346-354
- **HARRIS et al.** *J. Food Eng.,* 2004, vol. 61, 421-429
- **CHIRIFE ; IGLESIAS.** *J. Food Tech.,* 1978, vol. 13, 159-174
- **RÜEGG ; BLANC.** *J. Dairy Sci.,* 1976, vol. 59, 1019-1024
- **SAUREL et al.** *J. Food Eng.,* 2004, vol. 63, 163-170
- **HARDY.** Cheesemaking, from Science to Quality Assurance. Lavoisier Publishing Paris, 2000, 60-81
- **DESOBRY ; HARDY.** *J. Food Sci.,* 1994, vol. 59, 986-989
- **HARDY.** *Sci. Aliments.,* 1985, vol. 5, 153-162
- **BLANC et al.** *Schweiz. Milchw. Forsch.,* 1983, vol. 12 (2), 30-34
- World Meteorological Organization. 2000. General meteorological standards and recommended practices, Appendix A, corrigendum. *WMO Technical Regulations.,* 2000, vol. 49
- Cheesemaking, from Science to Quality Assurance. Lavoisier Publishing Paris, 2000, 447-473
- **PAJONK et al.** *J. Food Eng.,* 2003, vol. 57 (2), 72, 231-243
- **SONG et al.** *J. Food Eng.,* 2002, vol. 53, 103-109
- **KONDJOYAN ; DAUDIN.** *J. Food Eng.,* 1997, vol. 32, 255-240
- **OZISIK.** Heat transfer: a basic approach. McGraw-Hill, 1985